# EUROPEAN PATENT SPECIFICATION

(11) **EP 3 012 725 B1**
(45) Date of publication and mention of the grant of the patent: **08.02.2017**
(21) Application number: 15162614.0
(22) Date of filing: 07.04.2015
(51) Int. Cl.: G06F 3/0481, G06F 9/44

(54) **METHOD, DEVICE AND ELECTRONIC DEVICE FOR DISPLAYING DESCRIPTIVE ICON INFORMATION**
VERFAHREN, VORRICHTUNG UND ELEKTRONISCHE VORRICHTUNG ZUM ANZEIGEN VON BESCHREIBENDEN SYMBOLINFORMATIONEN
PROCÉDÉ, DISPOSITIF ET DISPOSITIF ÉLECTRONIQUE POUR AFFICHER DES INFORMATIONS D'ICÔNES DESCRIPTIVES

(30) Priority: 24.10.2014 CN 201410575749
(43) Date of publication of application: 27.04.2016
(73) Proprietor: Xiaomi Inc., Beijing 100085 (CN)
(72) Inventor: Liu, Daokuan, Beijing (CN); Liu, Shuai, Beijing (CN); Xing, Xinyan, Beijing (CN); Yang, Chunhe, Beijing (CN); Tang, Yao, Beijing (CN)
(74) Representative: Hanna, Peter William Derek

(56) References cited:
- EP-A1- 1 983 402
- US-A1- 2011 314 376
- Microsoft: "Tooltips and Infotips (Windows)", , 8 August 2014 (2014-08-08), XP055197034, Retrieved from the Internet: URL:https://web.archive.org/web/2014080823 4847/http://msdn.microsoft.com/en-us/libra ry/windows/desktop/dn742443(v=vs.85).aspx [retrieved on 2015-06-19]
- iReviews: "Hide Labels - Cydia Tweak", , 22 September 2014 (2014-09-22), XP054975932, Retrieved from the Internet: URL:https://www.youtube.com/watch?v=AaPoX_ fiITA [retrieved on 2015-06-18]
- Willie D.: "Android Tutorials - 05 - Custom Folders and Icons with Folder Organizer", , 4 February 2011 (2011-02-04), XP054975933, Retrieved from the Internet: URL:https://www.youtube.com/watch?v=nnKtBi 8mESo [retrieved on 2015-06-18]

## Description

### TECHNICAL FIELD

The present disclosure generally relates to the field of terminal technology, and more particularly, to a method, a device and an electronic device for displaying descriptive information related to corresponding icons.

### BACKGROUND

With the progressive development of terminal technology, users may install various application programs in terminals which may implement versatile functions, to meet demands in business, entertainment and the like. With regard to the application programs installed from the users, corresponding icon information may be displayed on screens of the terminals. Corresponding application programs may be run upon detection of selection and triggering of users on the icon information. The icon information involves application icons and descriptive information of the application icons for the user to identify corresponding application programs.

However, on one hand, descriptive information is composed of words, letters, numbers and other characters, which may bring disorder to a displayed screen interface, and tends to cover a background image. On the other hand, in order to embody personality of each individual application program, application icons employed by developers differ significantly and may directly reflect characteristics of corresponding application programs, thereby users may distinguish and identify application programs only by application icons.

Nevertheless, in the related prior art, descriptive information associated with all of the application icons may only be uniformly set as displayed or hidden by a manual setting operation, which is pretty cumbersome. However, for most application programs, displaying descriptive information may influence an overall display effect or format of a terminal screen, while for other application programs, hiding descriptive information associated with icons may make it inconvenient for the user to identify the application programs, by the respective icon only, which may influence operation efficiency.

Microsoft: "Tools and Infotips (Windows)" 8 August 2014, XP055197034, URL: https://web.archive.org/web/20140808234847/http://msdn.microsoft.com/en-us/library/windows/desktop/dn742443(v=vs.85).aspx is representative of the relevant state of the art.

### SUMMARY

In order to overcome the problem in the related art that displaying method of descriptive information is not desirable for usage and operation of a terminal, embodiments of the present invention provide a method, a device and an electronic device for displaying descriptive information related to corresponding icons, in accordance with claims which follow.

According to a first aspect of embodiments of the present disclosure, a method is provided for displaying descriptive information, including:
hiding descriptive information of an application icon on a screen interface of a terminal;
determining whether a request for viewing the descriptive information from a user exists according to a detected operation action from the user; and
displaying corresponding descriptive information in an associated region of the application icon if the request exists.

Optionally, the method further includes:
resuming hiding the descriptive information when a displaying time period of the descriptive information reaches a first preset time period.

Optionally, the determining whether the request for viewing the descriptive information from the user exists according to the detected operation action from the user, includes:
determining whether the request for viewing the descriptive information from the user exists according to whether the operation action from the user is detected during a second preset time period, after it is detected that the screen interface has flipped to a second screen interface from a first screen interface,
wherein, if no operation action from the user is detected, it is determined that the request for reviewing exists, and
the displaying the corresponding descriptive information in the associated region of the application icon, includes:
   displaying the corresponding descriptive information in respective associated region of respective application icon on the second screen interface.

Optionally, the determining whether the request for viewing the descriptive information from the user exists according to a detected operation action from the user, includes:
determining whether the request for viewing the descriptive information from the user exists according to whether a trigger operation on an application icon on the screen interface of the terminal is detected,
wherein, if a trigger operation on any one application icon is detected, it is determined that the request for reviewing exists, and
the displaying corresponding descriptive information in the associated region of the application icon, includes:
   displaying the corresponding descriptive information in the associated region of the one application icon.

Optionally, the determining whether the request for viewing the descriptive information from the user exists according to the detected operation action from the user, includes:
determining whether the request for viewing the descriptive information from the user exists according to whether a shake operation action to the terminal is detected,
wherein, if the shake operation action is detected, it is determined that the request for reviewing exists, and
the displaying corresponding descriptive information in the associated region of the application icon, includes:
   displaying the corresponding descriptive information in respective associated region of respective application icon.

According to a second aspect of embodiments of the present disclosure, a device is provided for displaying descriptive information, including:
a hiding unit, configured to hide descriptive information of an application icon on a screen interface of a terminal;
a determining unit, configured to determine whether a request for viewing the descriptive information from a user exists according to a detected operation action from the user; and
a displaying unit, configured to display corresponding descriptive information in an associated region of the application icon if a determination result obtained by the determining unit is that the request exists.

Optionally, the device further includes:
a resuming unit, configured to resume hiding the descriptive information when a displaying time period of the descriptive information reaches a first preset time period.

Optionally, the determining unit includes:
a time period determining subunit, configured to determine whether the request for viewing the descriptive information from the user exists according to whether an operation action from the user is detected during a second preset time period, after it is detected that the screen interface has flipped to a second screen interface from a first screen interface, wherein, if no operation action from the user is detected, it is determined that the request for reviewing exists, and
the displaying unit includes: a first displaying subunit, configured to display the corresponding descriptive information in respective associated region of respective application icon on the second screen interface, if a determination result obtained by the time period determining subunit is that the request for viewing exists.

Optionally, the determining unit includes:
a trigger determining subunit, configured to determine whether the request for viewing the descriptive information from the user exists according to whether a trigger operation on an application icon on the screen interface of the terminal is detected, wherein, if the trigger operation on any one application icon is detected, it is determined that the request for reviewing exists, and
the displaying unit includes: a second displaying subunit, configured to display corresponding descriptive information in an associated region of the said any application icon, if a determination result obtained by the trigger determining subunit is that the request for viewing exists.

Optionally, the determining unit includes:
a shake determining subunit, configured to determine whether the request for viewing the descriptive information from the user exists according to whether a shake operation action to the terminal is detected, wherein, if the shake operation action is detected, it is determined that the request for reviewing exists, and
the displaying unit includes: a third displaying subunit, configured to display corresponding descriptive information in respective associated region of respective application icon, if a determination result obtained by the shake determining subunit is that the request for viewing exists.

According to a third aspect of embodiments of the present disclosure, an electronic device is provided including:
a processor; and
a memory for storing instructions executable by the processor,
wherein the processor is configured to:
   hide descriptive information of an application icon on a screen interface of a terminal;
   determine whether a request for viewing the descriptive information from a user exists according to a detected operation action from the user; and
   display corresponding descriptive information in an associated region of the application icon if the request exists.

According to a fourth aspect of the embodiments of the present disclosure, a computer program is provided which when executing on a processor of a device for displaying descriptive information, performs a method according to the first aspect of embodiments of the present disclosure.

The technical solutions provided by the embodiments of the present disclosure include advantageous effects as follows:
in the present disclosure, by hiding descriptive information of application icons, a screen of a terminal may keep neat when a user does not want to view the descriptive information; meanwhile, the descriptive information may be displayed promptly on the screen of the terminal when it is detected that the user requests for viewing the descriptive information, so as to avoid reducing operation efficiency of the user, and to improve the user experience.

It is to be understood that both the foregoing general description and the following detailed description are exemplary and explanatory only and can not limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for displaying descriptive information, according to an exemplary embodiment;
Fig. 2 is a flow chart showing another method for displaying descriptive information, according to an exemplary embodiment;
Fig. 3 is a schematic diagram of the interface of a terminal according to an exemplary embodiment;
Fig. 4 is a flow chart showing another method for displaying descriptive information, according to an exemplary embodiment;
Fig. 5 is another schematic diagram of the interface of a terminal according to an exemplary embodiment;
Fig. 6 is another schematic diagram of the interface of a terminal according to an exemplary embodiment;
Fig. 7 is a block diagram illustrating a device for displaying descriptive information, according to an exemplary embodiment;
Fig. 8 is a block diagram illustrating another device for displaying descriptive information, according to an exemplary embodiment;
Fig. 9 is a block diagram illustrating another device for displaying descriptive information, according to an exemplary embodiment;
Fig. 10 is a block diagram illustrating another device for displaying descriptive information, according to an exemplary embodiment;
Fig. 11 is a block diagram illustrating another device for displaying descriptive information, according to an exemplary embodiment; and
Fig. 12 is a block diagram illustrating the configuration of a device for displaying descriptive information, according to an exemplary embodiment.

### DETAILED DESCRIPTION

Reference may now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

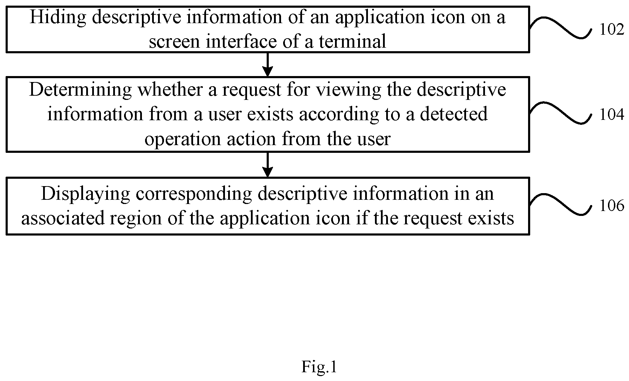

Fig. 1 is a flow chart showing a method for displaying descriptive information, according to an exemplary embodiment. As shown in Fig. 1, the method is applied in a terminal, and may include the following steps.

In step 102, descriptive information of an application icon on a screen interface of a terminal is hidden.

In this embodiment, due to increasingly higher identifiability of an application icon itself, by hiding descriptive information of an application icon, the screen interface of the terminal may only contain the application icon, presenting a neat and uniform overall displaying effect, and may not be necessary to the user for identifying and distinguishing the application icon.

In step 104, it is determined whether a request for viewing the descriptive information from a user exists according to a detected operation action from the user.

In this embodiment, with respect to some application icons that are not easy for the user to identify, when the request for viewing the descriptive information from the user exists, the request may be reflected on the operation action from the user. Therefore, by analyzing the operation action from the user, it may be determined whether the request for viewing the descriptive information exists, and the descriptive information may be promptly displayed, so as to present an excellent user experience.

In step 106, corresponding descriptive information is displayed in an associated region of the application icon if the request exists.

In this embodiment, the associated region of the application icon may refer to: a region located surrounding the application icon with a distance to an edge of the application icon, less than or equal to a preset distance, so that a user may directly determine visually that the application icon and the descriptive information in the region are associated.

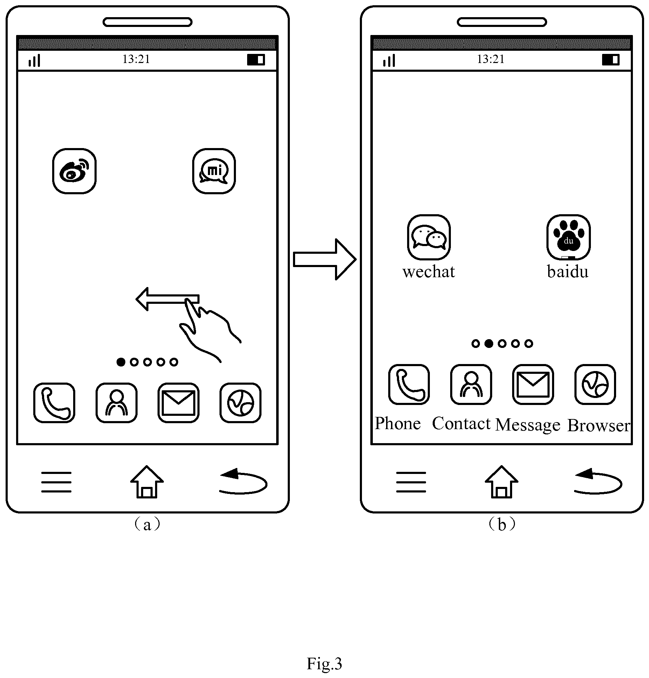

For example, as shown in Fig. 3, the descriptive information of the application icon may be a name of the application icon, and the associated region of the application icon may be a region right below the application icon for displaying the name thereof. In an illustrative way, in Figs. 3, 5 and 6, the descriptive information is displayed, for example, below the application icon, but the present disclosure is not limited thereto.

In this embodiment, "a request for viewing the descriptive information from the user exists" may be taken as a trigger condition. Thus only if the trigger condition is satisfied, it is determined to perform subsequent operations, leaving out cases where the trigger condition is not satisfied. However, "a request for viewing the descriptive information from the user exists" may also be taken as a judgment condition, and when the judgment condition is satisfied, it is determined to perform subsequent operations, otherwise the state is unchanged and other operations may be performed.

It can be seen from the above embodiment that, in the present disclosure, the descriptive information of the application icons is hidden by default, and by automatically detecting a request for viewing the descriptive information from the user, the descriptive information may be promptly displayed when the corresponding user request exists, so as to avoid reducing operation efficiency of the user and to improve the user experience.

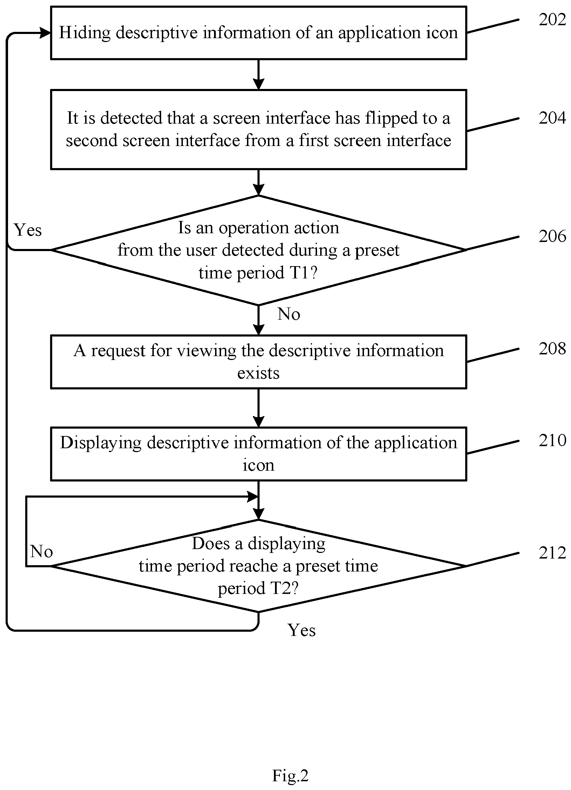

Referring to Fig. 2, which is a flow chart showing another method for displaying descriptive information, according to an exemplary embodiment, including the following steps.

In step 202, descriptive information of an application icon is hidden.

In this embodiment, the technical solution of the present disclosure may be taken as a special display mode or a display function. Thus when a user turns on the mode or the function in a terminal system, the method for displaying descriptive information based on the technical solution of the present disclosure may be implemented; or, when the user turns on other display modes or functions, corresponding display effects may be implemented, such as always displaying or hiding the descriptive information.

In this embodiment, Fig. 3(a) shows a screen interface where descriptive information is hidden. A user may directly determine that the two application icons at the top of the screen interface respectively correspond to "Sina Microblog" and "Mi Talk", the four application icons at the bottom of the screen interface respectively correspond to "telephone", "contact", "short message" and "browser".

In step 204, when it is detected that the screen interface has flipped to a second screen interface from a first screen interface by the user, the process is turned to step 206.

In this embodiment, in an initial first screen interface as shown in Fig. 3(a), since it is not detected that a request for viewing the descriptive information from the user at this time, descriptive information corresponding to all of the application icons is hidden. Herein the "descriptive information" may be a name of the application program corresponding to the application icon, and may also be other information for describing the application program, which is not limited by the present disclosure.

In step 206, it is determined whether an operation action from the user is detected during a preset time period T1; and if it is not detected, the process is turned to step 208, otherwise, the process is returned to step 202.

In this embodiment, Fig. 3(a) shows a first screen on the terminal screen (5 dots at the bottom of the interface indicate 5 screen interfaces on the terminal screen, among which a dark one indicates the current screen interface), i.e. the first screen interface. When the user performs a swipe operation gesture on the first screen interface, a second screen, i.e. the second screen interface, as shown in Fig. 3(b) is entered.

Wherein, when a user performs a page-flipping operation, it often means that he/she is searching for a certain application program and intends to start it. If, after the screen interface has flipped to the second screen interface by the user as shown in Fig. 3(b), a direct identification of the application icon is completed, and it is determined that the proper application icon is found, the application icon may be directly hit to start the application program; or, if there is no icon of the application program that the user is searching for in the second screen interface, the user may continue to perform the page-flipping operation or the like.

Accordingly, if the user directly identifies the application icon, corresponding operations may be performed immediately. While, if the application icon is not identified, the user may probably take a pause to consider the meaning of the application icon, which results in that no operation action from the user is detected within a long time period (for example, longer than or equal to a preset time period T1).

In step 208, it is determined whether a request for viewing the descriptive information from a user exists.

In step 210, descriptive information of the application icon is displayed.

In this embodiment, as shown in Fig. 3(b), the descriptive information may be displayed below the corresponding application icon, such that the user may directly determine the descriptive information and the application icon are associated.

In this embodiment, as an exemplary embodiment, all of the application icons on the terminal may be uniformly displayed, so as to simplify the setting of the terminal. As another exemplary embodiment, since the user produces a long time period of pause in browsing the second screen interfaces, it may probably mean that the user is considering a certain application icon on the second screen interface. In this case, only descriptive information of the application icons on the second screen interface is displayed, while descriptive information of application icons on other screen interfaces is not displayed. As yet another embodiment, it may be detected which application icon the user is most concerned with, for example, by acquiring information on the sight of the user through a camera and the like on the terminal, to determine the application icon of interest based on a position of the focus of the sight of the user (i.e. corresponding to "the focus of the sight of the user"), so that the descriptive information of the application icon may be displayed individually.

In step 212, when a displaying time period of the descriptive information reaches a preset time period T2, the process is returned to step 202.

In this embodiment, depending on the displaying time period of the descriptive information, the process is automatically returned to step 202, that is, resuming hiding the descriptive information, thereby it may be avoided that the descriptive information is displayed for a long time, and the screen interface of the terminal may be resumed to be neat in appearance promptly.

In this embodiment, the displaying time period of the descriptive information may be measured, and compared with the preset time period T2, to determine the flow of the process; or, "a displaying time period reaching a preset time period T2" may be set as a trigger condition by setting up a timer, thus once the condition is satisfied, the process is returned to step 202.

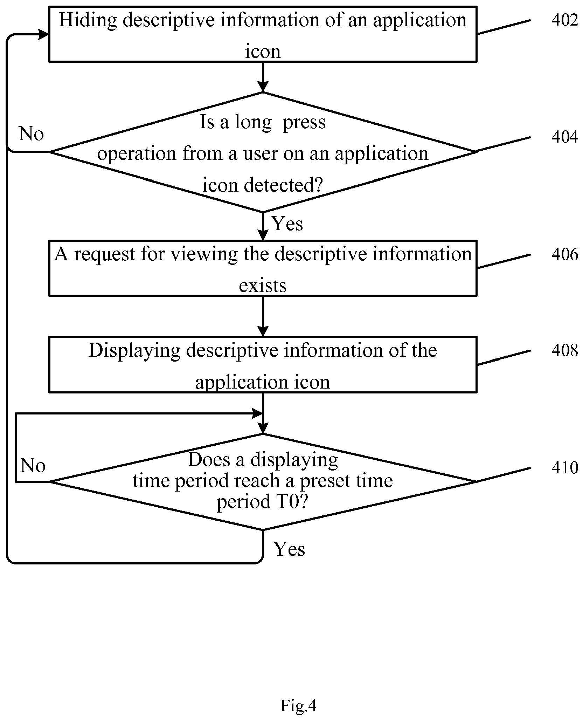

Referring to Fig. 4, which is a flow chart showing another method for displaying descriptive information, according to an exemplary embodiment, including the following steps.

In step 402, descriptive information of an application icon is hidden.

In step 404, when a long press operation from a user on a certain application icon on the screen interface of the terminal is detected, the process is turned to step 406.

In this embodiment, "a long press operation from a user on a certain application icon on the screen interface of the terminal is detected" may be taken as a trigger condition, and only if this trigger condition is satisfied, it is determined to perform subsequent operations, leaving out cases where the trigger condition is not satisfied. However, "a long press operation from a user on a certain application icon on the screen interface of the terminal is detected" may also be taken as a judgment condition, and when the judgment condition is satisfied, it is determined to perform subsequent operations, otherwise the state is unchanged and other operations may be performed.

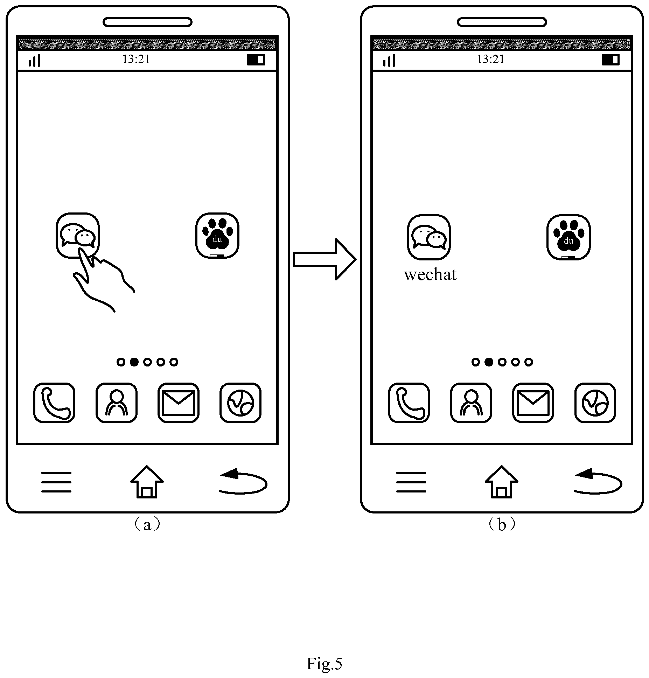

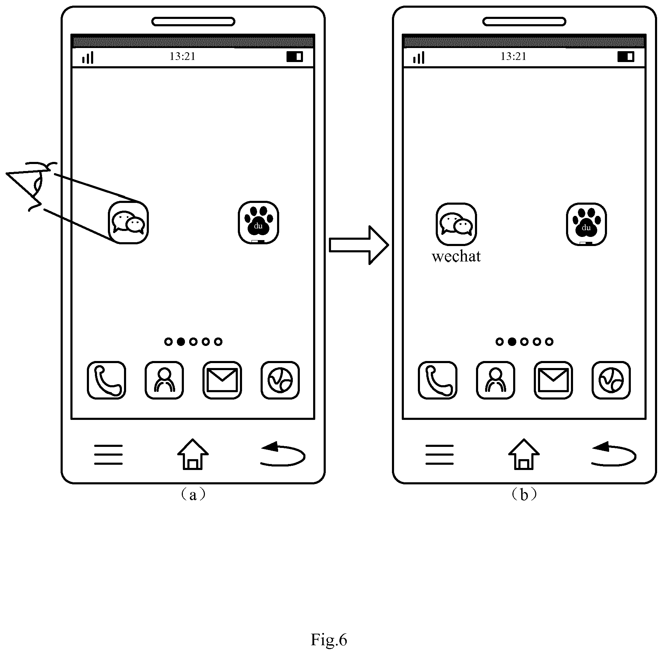

In this embodiment, as shown in Fig. 5(a), when the user intends to view descriptive information of a certain application icon, he/she may trigger the application icon by a long press, and then the descriptive information may be displayed. However, it should be understood by those skilled in the art that, in addition to a long press, a trigger operation may be implemented by other manners. For example, the trigger operation may be implemented by detecting a shake operation action to the terminal of the user, or as shown in Fig. 6(a), for example, the trigger operation may be implemented by detecting a focus of the sight of the user, and taking the application icon corresponding to the position of the focus as an application icon of interest; or, the trigger operation may be implemented with information on a time period, so as to reduce mis-trigger, for example, only when the sight of the user is focused on a certain application icon for a time period exceeding a preset time period and it is determined that the user is interested in that application icon.

In step 406, it is determined whether a request for viewing the descriptive information from a user exists.

In step 408, descriptive information of the application icon is displayed.

In this embodiment, as an exemplary embodiment, all of the application icons on the terminal may be uniformly displayed, so as to simplify the setting of the terminal; as another exemplary embodiment, only descriptive information of all of the application icons on the screen interface where the triggered application icon is located may be displayed, and descriptive information of application icons on other screen interfaces is not displayed; as yet another exemplary embodiment, such as an application icon "Wechat" in Fig. 5(b) and Fig. 6(b), only descriptive information of application icons triggered by a long press or focus of the sight of the user (that is, application icons corresponding to "a long press", "a focus of sight" and other operation actions from the user, such as the above application icon "Wechat") may be displayed, to minimize the displayed descriptive information and the influence on the overall display effect of the screen interface.

In step 410, when a displaying time period of the descriptive information reaches a preset time period T0, the process is returned to step 402.

In this embodiment, depending on the displaying time period of the descriptive information, the process is automatically returned to step 402, that is, resuming hiding the descriptive information, thereby it may be avoided that the descriptive information is displayed for a long time, and the screen interface of the terminal may be resumed to be neat in appearance promptly.

In this embodiment, the displaying time period of the descriptive information may be measured, and compared with the preset time period T0, to determine the flow of the process; or, "a displaying time period reaching a preset time period T0" may be set as a trigger condition by setting up a timer, thus once the condition is satisfied, the process is returned to step 402.

Corresponding to the foregoing embodiments of the method for displaying descriptive information, the present disclosure also provides embodiments of a device for displaying descriptive information.

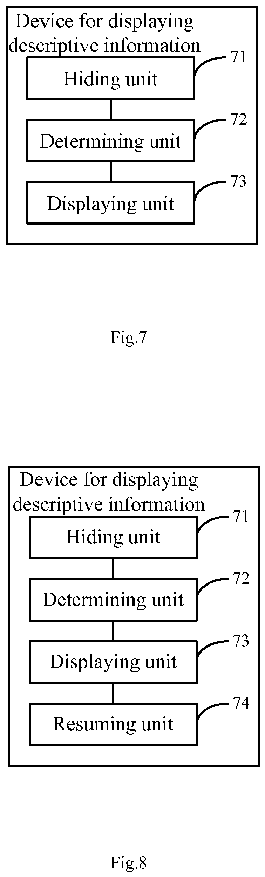

Fig. 7 is a block diagram illustrating a device for displaying descriptive information, according to an exemplary embodiment. Referring to Fig. 7, the device includes a hiding unit 71, a determining unit 72 and a displaying unit 73.

Wherein,
the hiding unit 71 is configured to hide descriptive information of an application icon on a screen interface of a terminal;
the determining unit 72 is configured to determine whether a request for viewing the descriptive information from a user exists according to a detected operation action from the user; and
the displaying unit 73 is configured to display corresponding descriptive information in an associated region of the application icon if a determination result obtained by the determining unit is that the request exists.

In the above embodiment, by hiding descriptive information of application icons, a screen display of a terminal may be kept neat when a user does not want to view the descriptive information; meanwhile, the descriptive information associated with icons may be displayed promptly on the screen of the terminal when it is detected that the user requests for viewing the descriptive information, so as to avoid influencing operational efficiency of the user, and to improve user experience.

As shown in Fig. 8, Fig. 8 is a block diagram illustrating another device for displaying descriptive information, according to an exemplary embodiment, in which, based on the embodiment shown in Fig. 7, the device may further include a resuming unit 74.

Wherein the resuming unit 74 is configured to resume hiding the descriptive information when a displaying time period of the descriptive information reaches a first preset time period.

In the above embodiment, by controlling a displaying time period of the descriptive information, the influence, caused by the descriptive information, on the displaying effect of the screen interface of the terminal may be reduced, so as to improve user experience.

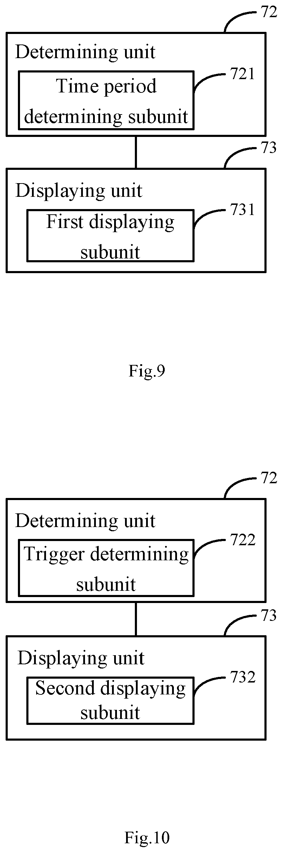

As shown in Fig. 9, Fig. 9 is a block diagram illustrating another device for displaying descriptive information, according to an exemplary embodiment, in which, based on the embodiment shown in Fig. 7, the determining unit 72 may include a time period determining subunit 721, and the displaying unit 73 may include a first displaying subunit 731.

Wherein the time period determining subunit 721 is configured to determine whether a request for viewing the descriptive information from a user exists according to whether an operation action from the user is detected during a second preset time period, after it is detected that the screen interface has flipped to a second screen interface from a first screen interface by the user, wherein, if no operation action from the user is detected, it is determined that the request for reviewing exists; and
the first displaying subunit 731 is configured to display corresponding descriptive information in a respective associated region of a respective application icon on the second screen interface, if a determination result obtained by the time period determining subunit 721 is that the request for viewing exists.

In the above embodiment, after the user identifies the application icon, he/she may perform a certain operation, and a long time period of pause in operation may occur only when the application icon is not identified properly and the user is thinking about it, thus a request for viewing the descriptive information from the user may be identified according thereto.

Wherein, when a pause in operation from the user occurs in the second screen interface, it means that the user is considering the type of the application icon on the second screen interface and a request for viewing the descriptive information from the user exists, thus only the descriptive information of the application icons on the second screen interface needs to be displayed, and the descriptive information of the application icons on other screen interfaces need not to be displayed.

It should be noted that, configuration of the time period determining subunit 721 and the first displaying subunit 731 in the above device embodiment as shown in Fig. 9 may also be included in the device embodiments shown in above Figs. 7 and 8, which is not limited by the present disclosure.

As shown in Fig. 10, Fig. 10 is a block diagram illustrating another device for displaying descriptive information, according to an exemplary embodiment, in which, based on the embodiment shown in Fig. 7, the determining unit 72 may include a trigger determining subunit 722, and the displaying unit 73 may include a second displaying subunit 732.

Wherein, the trigger determining subunit 722 is configured to determine whether a request for viewing the descriptive information from a user exists according to whether a trigger operation on an application icon on the screen interface of the terminal is detected, wherein, if a trigger operation on any application icon is detected, it is determined that the request for reviewing exists; and
the second displaying subunit 732 is configured to display corresponding descriptive information in an associated region of the said any application icon, if a determination result obtained by the trigger determining subunit 722 is that the request for viewing exists.

In the above embodiment, when the user intends to view descriptive information of a certain application icon, he/she may directly trigger on the application icon, thereby a definite request for viewing the corresponding application icon from the user may be determined by detecting the trigger operation.

Wherein, when a trigger operation on a certain application icon from the user is detected, it means that the user expresses a request for viewing the descriptive information of that application icon, thus only the descriptive information of that application icon needs to be displayed to satisfy the demand of the user, and minimize the influence to the overall neatness of the terminal screen.

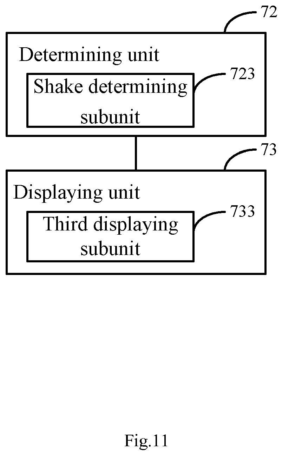

It should be noted that, configuration of the trigger determining subunit 722 and the second displaying subunit 732 in the above device embodiment as shown in Fig. 11 may also be included in the device embodiments shown in above Figs. 7 and 8, which is not limited by the present disclosure.

As shown in Fig. 11, Fig. 11 is a block diagram illustrating another device for displaying descriptive information, according to an exemplary embodiment, in which, based on the embodiment shown in Fig. 7, the determining unit 72 may include a shake determining subunit 723, and the displaying unit 73 may include a third displaying subunit 733.

Wherein, the shake determining subunit 723 is configured to determine whether a request for viewing the descriptive information from a user exists according to whether a shake operation action to the terminal is detected, wherein, if the shake operation action is detected, it is determined that the request for reviewing exists; and
the third displaying subunit 733 is configured to display corresponding descriptive information in each associated region of each application icon, if a determination result obtained by the shake determining subunit 723 is that the request for viewing exists.

In the above embodiment, descriptive information of an application icon may be displayed directly according to the detection of a user request for viewing, so as to simplify the setting of the terminal; or corresponding application icons, i.e. application icons of interest may be determined by the operation action from the user, thereby only descriptive information of these application icons is displayed, so as to reduce influence to the overall neatness on the terminal screen and the display effect.

It should be noted that, configuration of the shake determining subunit 723 and the third displaying subunit 733 in the above device embodiment as shown in Fig. 11 may also be included in the device embodiments shown in above Figs. 7 and 8, which is not limited by the present disclosure.

With respect to the device in the above embodiments, specific operations performed by each modules have been described in detail in the embodiments of related method, and detailed description are omitted here.

For the device embodiments, since they substantially correspond to the method embodiments, relevant part may be referred to the description of the method embodiments. The above described device embodiments are only illustrative, in which units described as separate components may be or may be not separate physically, components shown as units may be or may be not physical units, and they may be located at one place or may be distributed to a plurality of network units.

Correspondingly, the present disclosure also provides an information displaying device, including: a processor; and a memory for storing instructions executable by the processor, wherein the processor is configured to: hide descriptive information of an application icon on a screen interface of a terminal; determine whether a request for viewing the descriptive information from a user exists according to a detected operation action from the user; and display corresponding descriptive information in an associated region of the application icon if the request exists.

Correspondingly, the present disclosure also provides a terminal, including a memory and one or more programs, wherein the one or more programs are stored in the memory, and configured to be executable by one or more processors, wherein the one or more programs include instruction to cause operations as follows: hiding descriptive information of an application icon on a screen interface of a terminal; determining whether a request for viewing the descriptive information from a user exists according to a detected operation action from the user; and displaying corresponding descriptive information in an associated region of the application icon if the request exists.

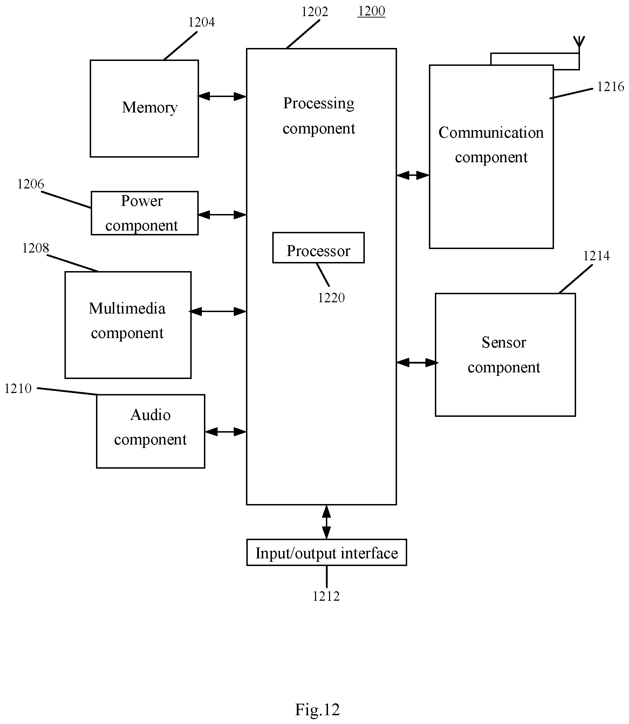

Fig. 12 is a block diagram illustrating a device 1200 for displaying descriptive information, according to an exemplary embodiment. For example, the device 1200 may be a mobile phone, a computer, a digital broadcast terminal, a messaging device, a gaming console, a tablet, a medical device, exercise equipment, a personal digital assistant, and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

It may be appreciated that the present disclosure is not limited to the exact construction that has been described above and illustrated in the accompanying drawings, and that various modifications and changes can be made without departing from the scope thereof.

## Claims

1. A method for displaying descriptive information related to corresponding application icons, wherein, the method comprises:
hiding (102) descriptive information of application icons on a current screen interface of a terminal;
determining (104) whether a request for viewing the descriptive information of a particular application icon or a group of all application icons on the current screen interface from a user exists according to a detected operation action from the user; and
promptly displaying (106) corresponding descriptive information in an associated region of the particular application icon or the group of all application icons on the screen interface if the request exists;
**characterized in that**:
the determining whether the request for viewing the descriptive information of a particular application icon on the current screen interface from a user exists according to a detected operation action from the user, comprises:
determining whether the request for viewing the descriptive information from the user exists according to whether a trigger operation (404) on the particular application icon on the current screen interface of the terminal is detected, said trigger operation consisting of one of:
a long press on a particular application icon (404) or;
a focus of sight of the user on a particular application icon being detected;
and further **characterised in that** the determining whether the request for viewing the descriptive information of a group of all application icons on a current screen interface from a user exists according to a detected operation action from the user, comprises:
determining whether the request for viewing the descriptive information from the user exists according to whether a trigger operation (406) on the group of all application icons on the current screen interface of the terminal is detected, said trigger operation consisting of one of:
a shake operation or a pause in user operation actions being detected longer than or equal to a first preset time period (T1);
wherein, if the trigger operation is detected, it is determined that the request for viewing exists (406), and
the corresponding descriptive information is displayed in the associated region of the particular application icon or group of all application icons on the current screen interface.

2. The method of claim 1, wherein, the method further comprises:
resuming hiding (202) the descriptive information when it is determined (206) that a displaying time period of the descriptive information of the particular application icon or group of all application icons reaches a second preset time period (T2).

3. The method of claim 1, wherein, the determining whether the request for viewing the descriptive information from the user exists according to the detected operation action from the user, comprises:
determining (212) whether the request for viewing the descriptive information of a group of all icons on the current screen interface from the user exists according to whether the operation action from the user is detected during a second preset time period (T2), after it is detected (204) that the current screen interface has flipped to a second screen interface from a first screen interface, wherein, if no operation action from the user is detected, it is determined that the request for viewing exists, and
displaying the corresponding descriptive information in a respective associated region of each respective application icon on the second screen interface.

4. A terminal device having a screen interface for displaying descriptive information related to corresponding icons, comprising:
a hiding unit (71), configured to hide descriptive information of application icons on a current screen interface;
a determining unit (72), configured to determine whether a request for viewing the descriptive information of a particular application icon or a group of all application icons on the current screen interface from a user exists according to a detected operation action from the user; and
a displaying unit (73), configured to promptly display corresponding descriptive information in a respective associated region of the the particular application icon or the group of all application icons on the current screen interface if a determination result obtained by the determining unit is that the request exists;
**characterized by**:
a trigger determining subunit (722), configured to determine whether the request for viewing the descriptive information of a particular application icon on the current screen interface from a user exists according to a detected operation action from the user, comprising:
determining whether the request for viewing the descriptive information from the user exists according to whether a trigger operation (404) on the particular application icon on the current screen interface of the terminal is detected, said trigger operation consisting of one of:
a long press on a particular application icon (404) or
a focus of sight of the user on a particular application icon being detected; and further **characterised by** a trigger determining subunit (723) configured to determine whether the request for viewing the descriptive information of a group of all application icons on a current screen interface from a user exists according to a detected operation action from the user, comprising:
determining whether the request for viewing the descriptive information from the user exists according to whether a trigger operation (406) on the group of all application icons on the current screen interface of the terminal is detected, said trigger operation consisting of one of:
a shake operation or
a pause in user operation actions being detected longer than or equal to a first preset time period (T1;
and wherein the displaying unit (73) comprises: a displaying subunit (732,733), configured to display the corresponding descriptive information in an associated region of the particular application icon or group of all application icons on the current screen interface, if a determination result obtained by the trigger determining subunit is that the request for viewing exists.

5. The device of claim 4, wherein, the device further comprises:
a resuming unit (74), configured to resume hiding the descriptive information when a displaying time period of the descriptive information reaches a first preset time period.

6. The device of claim 4, wherein, the determining unit (72) comprises:
a time period determining subunit (721), configured to determine whether a request for viewing the descriptive information of a particular group of all icons on the current screen interface from the user exists according to whether an operation action from the user is detected during a second preset time period (T2), after it is detected that the screen interface has flipped to a second screen interface from a first screen interface, wherein, if no operation action from the user is detected, it is determined that the request for viewing exists, and
the displaying unit (73) comprises: a first displaying subunit (731), configured to display corresponding descriptive information in respective associated region of each application icon on the second screen interface, if a determination result obtained by the time period determining subunit is that the request for viewing exists.

7. A computer program, which when executing on a processor of a device for displaying descriptive information, performs a method according to any one of claims 1 to 3.

## Patentansprüche

1. Verfahren zum Anzeigen beschreibender Informationen in Bezug auf entsprechende Anwendungsymbole, wobei das Verfahren Folgendes beinhaltet:
Verbergen (102) beschreibender Informationen über Anwendungsymbole auf einer aktuellen Bildschirmoberfläche eines Endgeräts;
Feststellen (104), ob eine Anforderung zum Betrachten der beschreibenden Informationen eines bestimmten Anwendungsymbols oder einer Gruppe aller Anwendungsymbole auf der aktuellen Bildschirmoberfläche von einem Benutzer vorliegt, anhand einer erkannten Betätigungsaktion von dem Benutzer; und
sofortiges Anzeigen (106) entsprechender beschreibender Informationen in einer assoziierten Region des bestimmten Anwendungsymbols oder der Gruppe aller Anwendungsymbole auf der Bildschirmoberfläche, wenn die Anforderung vorliegt;
**dadurch gekennzeichnet, dass**:
das Feststellen, ob die Anforderung zum Betrachten der beschreibenden Informationen eines bestimmten Anwendungssymbols auf der aktuellen Bildschirmoberfläche von einem Benutzer vorliegt, anhand einer erkannten Betätigungsaktion von dem Benutzer Folgendes beinhaltet:
Feststellen, ob die Anforderung zum Betrachten der beschreibenden Informationen von dem Benutzer vorliegt, je nachdem, ob eine Auslösebetätigung (404) auf dem bestimmten Anwendungsymbol auf der aktuellen Bildschirmoberfläche des Endgeräts erkannt wird, wobei die genannte Auslösebetätigung aus einem der Folgenden besteht:
Erkennen eines langen Drückens auf ein bestimmtes Anwendungssymbol (404) oder einer Fokussierung des Blicks des Benutzers auf ein bestimmtes Anwendungsymbol;
und ferner **dadurch gekennzeichnet, dass**
das Feststellen, ob die Anforderung zum Betrachten der beschreibenden Informationen einer Gruppe aller Anwendungssymbole auf einer aktuellen Bildschirmoberfläche von einem Benutzer vorliegt, anhand einer erkannten Betätigungsaktion vom Benutzer Folgendes beinhaltet:
Feststellen, ob die Anforderung zum Betrachten der beschreibenden Informationen von dem Benutzer vorliegt, je nachdem, ob eine Auslösebetätigung (406) auf der Gruppe aller Anwendungssymbole auf der aktuellen Bildschirmoberfläche des Endgeräts erkannt wird, wobei die genannte Auslösebetätigung aus einem der Folgenden besteht:
Erkennen eines Schüttelns oder einer Pause in den Benutzerbetätigungsaktionen, das/die gleich oder länger als eine erste voreingestellte Zeitperiode (T1) ist;
wobei, wenn die Auslösebetätigung erkannt wird, festgestellt wird, dass die Anforderung zum Betrachten vorliegt (406), und
die entsprechenden beschreibenden Informationen in der assoziierten Region des bestimmten Anwendungsymbols oder der bestimmten Gruppe aller Anwendungsymbole auf der aktuellen Bildschirmoberfläche angezeigt werden.

2. Verfahren nach Anspruch 1, wobei das Verfahren ferner Folgendes umfasst:
Wiederaufnehmen des Verbergens (202) der beschreibenden Informationen, wenn festgestellt (206) wird, dass eine Anzeigezeitperiode der beschreibenden Informationen des bestimmten Anwendungsymbols oder der bestimmten Gruppe aller Anwendungssymbole eine zweite voreingestellte Zeitperiode (T2) erreicht.

3. Verfahren nach Anspruch 1, wobei das Feststellen, ob die Anforderung zum Betrachten der beschreibenden Informationen vom Benutzer vorliegt, anhand der erkannten Betätigungsaktion vom Benutzer Folgendes beinhaltet:
Feststellen (212), ob die Anforderung zum Betrachten der beschreibenden Informationen einer Gruppe aller Symbole auf der aktuellen Bildschirmoberfläche von dem Benutzer vorliegt, je nachdem, ob die Betätigungsaktion vom Benutzer während einer zweiten voreingestellten Zeitperiode (T2) erkannt wird, nachdem erkannt (204) wurde, dass die aktuelle Bildschirmoberfläche von einer ersten Bildschirmoberfläche auf eine zweite Bildschirmoberfläche gewechselt ist, wobei, wenn keine Betätigungsaktion vom Benutzer erkannt wird, festgestellt wird, dass die Anforderung zum Betrachten vorliegt, und
Anzeigen der entsprechenden beschreibenden Informationen in einer jeweiligen assoziierten Region jedes jeweiligen Anwendungsymbols auf der zweiten Bildschirmoberfläche.

4. Endgerät mit einer Bildschirmoberfläche zum Anzeigen von beschreibenden Informationen in Bezug auf entsprechende Symbole, das Folgendes umfasst:
eine Verbergungseinheit (71), konfiguriert zum Verbergen von beschreibenden Informationen von Anwendungsymbolen auf einer aktuellen Bildschirmoberfläche;
eine Feststellungseinheit (72), konfiguriert zum Feststellen, ob eine Anforderung zum Betrachten der beschreibenden Informationen eines bestimmten Anwendungssymbols oder einer Gruppe aller Anwendungsymbole auf der aktuellen Bildschirmoberfläche von einem Benutzer vorliegt, anhand einer erkannten Betätigungsaktion von dem Benutzer; und
eine Anzeigeeinheit (73), konfiguriert zum sofortigen Anzeigen entsprechender beschreibender Informationen in einer jeweiligen assoziierten Region des bestimmten Anwendungsymbols oder der Gruppe aller Anwendungsymbole auf der aktuellen Bildschirmoberfläche, wenn ein von der Feststellungseinheit erhaltenes Feststellungsergebnis das ist, dass die Anforderung vorliegt;
**gekennzeichnet durch**:
eine Auslösungsfeststellungs-Subeinheit (792), konfiguriert zum Feststellen, ob die Anforderung zum Betrachten der beschreibenden Informationen eines bestimmten Anwendungssymbols auf der aktuellen Bildschirmoberfläche von einem Benutzer vorliegt, anhand einer erkannten Betätigungsaktion von dem Benutzer, die Folgendes umfasst:
Feststellen, ob die Anforderung zum Betrachten der beschreibenden Informationen von dem Benutzer vorliegt, je nachdem, ob eine Auslösebetätigung (404) auf dem bestimmten Anwendungsymbol auf dem aktuellen Bildschirmoberfläche des Endgerät erkannt wird, wobei die genannte Auslösebetätigung aus einem der Folgenden besteht:
Erkennen eines langen Drückens auf ein bestimmtes Anwendungsymbol (404) oder einer Fokussierung des Blicks des Benutzers auf ein bestimmtes Anwendungsymbol;
und ferner **gekennzeichnet durch** eine Auslösefeststellungs-Subeinheit (723), konfiguriert zum Feststellen, ob die Anforderung zum Betrachten der beschreibenden Informationen einer Gruppe aller Anwendungssymbole auf einer aktuellen Bildschirmoberfläche von einem Benutzer vorliegt, anhand einer erkannten Betätigungsaktion vom Benutzer, das Folgendes beinhaltet:
Feststellen, ob die Anforderung zum Betrachten der beschreibenden Informationen von dem Benutzer vorliegt, je nachdem, ob eine Auslösebetätigung (406) auf der Gruppe aller Anwendungssymbole auf der aktuellen Bildschirmoberfläche des Endgeräts erkannt wird, wobei die genannte Auslösebetätigung aus einem der Folgenden besteht:
Erkennen eines Schüttelns oder einer Pause in den Benutzerbetätigungsaktionen, das/die gleich oder länger ist als eine erste voreingestellte Zeitperiode (T1);
und wobei die Anzeigeeinheit (73) Folgendes umfasst: eine Anzeigesubeinheit (732, 733), konfiguriert zum Anzeigen der entsprechenden beschreibenden Informationen in einer assoziierten Region des bestimmten Anwendungsymbols oder der bestimmten Gruppe aller Anwendungsymbole auf der aktuellen Bildschirmoberfläche, wenn ein von der Auslösefeststellungs-Subeinheit erhaltenes Feststellungsergebnis das ist, dass die Anforderung zum Betrachten vorliegt.

5. Gerät nach Anspruch 4, wobei das Gerät ferner Folgendes umfasst:
eine Wiederaufnahmeeinheit (74), konfiguriert zum Wiederaufnehmen des Verbergens der beschreibenden Informationen, wenn eine Anzeigezeitperiode der beschreibenden Informationen eine erste voreingestellte Zeitperiode erreicht.

6. Gerät nach Anspruch 4, wobei die Feststellungseinheit (72) Folgendes umfasst:
eine Zeitperiodenfeststellungs-Subeinheit (721), konfiguriert zum Feststellen, ob eine Anforderung zum Betrachten der beschreibenden Informationen einer bestimmten Gruppe aller Symbole auf der aktuellen Bildschirmoberfläche vom Benutzer vorliegt, je nachdem, ob eine Betätigungsaktion von dem Benutzer während einer zweiten voreingestellten Zeitperiode (T2) erkannt wird, nachdem erkannt wurde, dass die Bildschirmoberfläche von einer ersten Bildschirmoberfläche auf eine zweite Bildschirmoberfläche gewechselt ist, wobei, wenn keine Betätigungsaktion vom Benutzer erkannt wird, festgestellt wird, dass die Anforderung zum Betrachten vorliegt, und
die Anzeigeeinheit (73) Folgendes umfasst: eine erste Anzeigesubeinheit (731), konfiguriert zum Anzeigen entsprechender beschreibender Informationen in einer jeweiligen assoziierten Region jedes Anwendungsymbols auf der zweiten Bildschirmoberfläche, wenn ein von der Zeitperiodenfeststellungs-Subeinheit erhaltenes Feststellungsergebnis das ist, dass die Anforderung zum Betrachten vorliegt.

7. Computerprogramm, das bei Abarbeitung auf einem Prozessor eines Geräts zum Anzeigen von beschreibenden Informationen ein Verfahren nach einem der Ansprüche 1 bis 3 ausführt.

## Revendications

1. Un procédé d'affichage d'informations descriptives relatives à des icônes d'application correspondantes, où le procédé comprend :
le masquage (102) d'informations descriptives d'icônes d'application sur une interface d'écran courante d'un terminal,
la détermination (104) si une demande de consultation des informations descriptives d'une icône d'application particulière ou d'un groupe de la totalité des icônes d'application sur l'interface d'écran courante provenant d'un utilisateur existe en fonction d'une action de fonctionnement détectée provenant de l'utilisateur, et
l'affichage rapide (106) d'informations descriptives correspondantes dans une zone associée de l'icône d'application particulière ou du groupe de la totalité des icônes d'application sur l'interface d'écran si la demande existe,
**caractérisé en ce que** :
la détermination si la demande de consultation des informations descriptives d'une icône d'application particulière sur l'interface d'écran courante provenant d'un utilisateur existe en fonction d'une action de fonctionnement détectée provenant de l'utilisateur comprend :
la détermination si la demande de consultation des informations descriptives provenant de l'utilisateur existe selon qu'une opération de déclenchement (404) sur l'icône d'application particulière sur l'interface d'écran courante du terminal est détectée, ladite opération de déclenchement se composant d'un élément parmi :
la détection d'une pression longue sur une icône d'application particulière (404), ou
d'une focalisation de la vision de l'utilisateur sur une icône d'application particulière, et
**caractérisé en outre en ce que**
la détermination si la demande de consultation des informations descriptives d'un groupe de la totalité des icônes d'application sur une interface d'écran courante provenant d'un utilisateur existe en fonction d'une action de fonctionnement détectée provenant de l'utilisateur comprend :
la détermination si la demande de consultation des informations descriptives provenant de l'utilisateur existe selon qu'une opération de déclenchement (406) sur le groupe de la totalité des icônes d'application sur l'interface d'écran courante du terminal est détectée, ladite opération de déclenchement se composant d'une opération parmi :
la détection d'une opération de secouement ou
d'une pause dans des actions de fonctionnement d'utilisateur plus longue que ou égale à une première durée temporelle prédéfinie (T1),
où, si l'opération de déclenchement est détectée, il est déterminé que la demande de consultation existe (406), et
les informations descriptives correspondantes sont affichées dans la zone associée de l'icône d'application particulière ou d'un groupe de la totalité des icônes d'application sur l'interface d'écran courante.

2. Le procédé selon la Revendication 1, où, le procédé comprend en outre :
la reprise du masquage (202) des informations descriptives lorsqu'il est déterminé (206) qu'une période temporelle d'affichage des informations descriptives de l'icône d'application particulière ou du groupe de la totalité des icônes d'application a atteint une deuxième période temporelle prédéfinie (T2).

3. Le procédé selon la Revendication 1, où la détermination si la demande de consultation des informations descriptives provenant de l'utilisateur existe en fonction de l'action de fonctionnement détectée provenant de l'utilisateur, comprend :
la détermination (212) si la demande de consultation des informations descriptives d'un groupe de la totalité des icônes sur l'interface d'écran courante provenant de l'utilisateur existe selon que l'action de fonctionnement provenant de l'utilisateur est détectée au cours d'une deuxième période temporelle prédéfinie (T2) après la détection (204) que l'interface d'écran courante a basculé vers une deuxième interface d'écran à partir d'une première interface d'écran, où, si aucune action de fonctionnement provenant de l'utilisateur n'est détectée, il est déterminé que la demande de consultation existe, et
l'affichage des informations descriptives correspondantes dans une zone respective associée de chaque icône d'application respective sur la deuxième interface d'écran.

4. Un dispositif terminal possédant une interface d'écran destinée à l'affichage d'informations descriptives relatives à des icônes correspondantes, comprenant :
une unité de masquage (71) configurée de façon à masquer des informations descriptives d'icônes d'application sur une interface d'écran courante,
une unité de détermination (72) configurée de façon à déterminer si une demande de consultation des informations descriptives d'une icône d'application particulière ou d'un groupe de la totalité des icônes d'application sur l'interface d'écran courante provenant d'un utilisateur existe en fonction d'une action de fonctionnement détectée provenant de l'utilisateur, et
une unité d'affichage (73) configurée de façon à afficher rapidement des informations descriptives correspondantes dans une zone associée respective de l'icône d'application particulière ou du groupe de la totalité des icônes d'application sur l'interface d'écran courante si un résultat de détermination obtenu par l'unité de détermination est que la demande existe,
**caractérisé par** :
une sous-unité de détermination de déclenchement (722) configurée de façon à déterminer si la demande de consultation des informations descriptives d'une icône d'application particulière sur l'interface d'écran courante provenant d'un utilisateur existe en fonction d'une action de fonctionnement détectée provenant de l'utilisateur, comprenant :
la détermination si la demande de consultation des informations descriptives provenant de l'utilisateur existe selon qu'une opération de déclenchement (404) sur l'icône d'application particulière sur l'interface d'écran courante du terminal est détectée, ladite opération de déclenchement se composant d'un élément parmi :
la détection d'une pression longue sur une icône d'application particulière (404), ou
d'une focalisation de la vision de l'utilisateur sur une icône d'application particulière,
et **caractérisé en outre par** une sous-unité de détermination de déclenchement (723) configurée de façon à déterminer si la demande de consultation des informations descriptives d'un groupe de la totalité des icônes d'application sur une interface d'écran courante provenant d'un utilisateur existe en fonction d'une action de fonctionnement détectée provenant de l'utilisateur, comprenant :
la détermination si la demande de consultation des informations descriptives provenant de l'utilisateur existe selon qu'une opération de déclenchement (406) sur le groupe de la totalité des icônes d'application sur l'interface d'écran courante du terminal est détectée, ladite opération de déclenchement se composant d'une opération parmi :
la détection d'une opération de secouement ou
d'une pause dans des actions de fonctionnement d'utilisateur plus longue que ou égale à une première période temporelle prédéfinie (T1),
et où l'unité d'affichage (73) comprend : une sous-unité d'affichage (732, 733) configurée de façon à afficher les informations descriptives correspondantes dans une zone associée de l'icône d'application particulière ou du groupe de la totalité des icônes d'application sur l'interface d'écran courante si un résultat de détermination obtenu par la sous-unité de détermination de déclenchement est que la demande de consultation existe.

5. Le dispositif selon la Revendication 4, où le dispositif comprend en outre :
une unité de reprise (74) configurée de façon à reprendre le masquage des informations descriptives lorsqu'une période temporelle d'affichage des informations descriptives a atteint une première période temporelle prédéfinie.

6. Le dispositif selon la Revendication 4, où l'unité de détermination (72) comprend :
une sous-unité de détermination de période temporelle (721) configurée de façon à déterminer si une demande de consultation des informations descriptives d'un groupe particulier de la totalité des icônes sur l'interface d'écran courante provenant de l'utilisateur existe selon qu'une action de fonctionnement provenant de l'utilisateur est détectée au cours d'une deuxième période temporelle prédéfinie (T2) après la détection que l'interface d'écran a basculé vers une deuxième interface d'écran à partir d'une première interface d'écran, où, si aucune action de fonctionnement provenant de l'utilisateur n'est détectée, il est déterminé que la demande de consultation existe, et
l'unité d'affichage (73) comprend : une première sous-unité d'affichage (731) configurée de façon à afficher des informations descriptives correspondantes dans une zone respective associée de chaque icône d'application sur la deuxième interface d'écran si un résultat de détermination obtenu par la sous-unité de détermination de période temporelle est que la demande de consultation existe.

7. Un programme informatique, qui, lorsqu'il est exécuté sur un processeur d'un dispositif destiné à l'affichage d'informations descriptives, exécute un procédé selon l'une quelconque des Revendications 1 à 3.
